# EUROPEAN PATENT SPECIFICATION

(11) **EP 3 320 960 B1**
(45) Date of publication and mention of the grant of the patent: **02.12.2020**
(21) Application number: 17199128.4
(22) Date of filing: 30.10.2017
(51) Int. Cl.: B01D 35/30, B01D 36/00, B01D 29/01, F02M 37/22

(54) **SERVICEABLE DIESEL FUEL FILTER ASSEMBLY**
WARTUNGSFÄHIGE DIESELKRAFTSTOFFFILTERBAUGRUPPE
ENSEMBLE DE FILTRE À CARBURANT DIESEL MAINTENABLE

(30) Priority: 15.11.2016 US 201615351984
(43) Date of publication of application: 16.05.2018
(73) Proprietor: Sogefi Engine Systems USA, Inc., Rochester Hills, MI 48309 (US)
(72) Inventor: KERN, Tom, Rochester Hills, MI, 48309 (US); ROLLAND, Francis, Rochester Hills, MI, 48309 (US); SANET, Fabien, Rochester Hills, MI, 48309 (US)
(74) Representative: Hohgardt, Martin

(56) References cited:
- EP-A1- 3 141 293
- EP-A2- 0 362 114
- WO-A1-03/099414
- US-A- 4 491 120

## Description

### TECHNICAL FIELD

The invention of the present application relates generally toward a filtration assembly for a diesel fuel system. More specifically, the invention of the present application relates toward a serviceable configuration of a filter assembly for a diesel fuel system.

### BACKGROUND

Diesel fuel engines have become increasingly complex to meet both mileage requirements and environmental standards. As such, diesel fuel being delivered to these highly technical engines is required to be both particulate-free and substantially absent of water and air, all of which can reduce diesel fuel engine performance and durability.

Presently, diesel fuel is filtered using a cylindrical filter making use of a concentric filtration arrangement. A particulate filter that separates particulates from the diesel fuel is disposed within a tubular housing. A water separator, when included, is typically aligned in the central portion of the tubular housing in a concentric orientation relative to the filtration media. The water separator reduces the amount of water disposed in the diesel fuel prior to delivering diesel fuel to the diesel engine. During operation, diesel fuel passes through the particulate filter media and subsequently through the water filtration system formed from one or more concentric layers before exiting the cylindrical filter. Although this design has proved functional for many years, the can-like shape of the filter housing has become increasingly problematic. For example, decreasing packaging space for filtration systems within an engine compartment is driving alternative designs for filtration assemblies. Limited space between the filter media and the water separator does not provide sufficient diffusion of the water prior to separation, an arrangement that has not proved adequate with can-like shape filtration assemblies. Examples for diesel fuel filter assemblies are shown in EP 3 141 293 A1, EP 0 362 114 A2 and WO 03/099414 A1

In addition, improved service of fuel filtration systems is also of interest to both the consumers, the shops that service the fuel filtration systems and the customers. Service requiring technical proficiency can result in inadequate fuel filtration or failure of the filtrations system altogether.

Therefore, it would be desirable to provide an optimized design of a filtration assembly capable of meeting the demands of new, highly technical diesel engines, while providing improved serviceability.

### SUMMARY

This desire is fulfilled by the subject-matter of the independent claims. A filter assembly for filtering diesel fuel used by a diesel engine includes a housing that defines a housing opening, an unfiltered fuel inlet and a filtered fuel outlet. A panel is matable to the housing for sealably enclosing the opening for forming a housing chamber. The panel defines an inner surface disposed within said housing chamber when the panel encloses the opening defined by the housing. A filter element defined by a peripheral wall includes filter media that is sealably engaged and defines an unfiltered side and a filtered side of said filter element. The peripheral wall is sealably affixed to the inner surface of the panel enclosing the unfiltered side of the filter element from the housing chamber to define an unfiltered chamber that is disposed in fluid communication with the unfiltered fuel inlet. A permeable barrier is affixed to the peripheral wall and defines a filtered chamber with the filtered side of the filter element and receives filtered fuel from the unfiltered chamber through the filter media. The housing chamber receives filtered fuel through the permeable barrier and is fluidly connected with the filtered fuel outlet.

The simplified design of the fuel filter of the present invention provides a low cost, fully serviceable fuel filter. The reduced complexity makes use of the housing walls to seal the unfiltered side of the filter element. In addition, sealing the panel onto which the filter element is affixed to the housing simplifies the housing design reducing the number of parts required of the fuel filter. The simplified design and associated low cost provides the ability to merely discard the fuel filter, when desired, rather than disassemble and reconfigure the filter element.

### BRIEF DESCRIPTION OF THE DRAWINGS

Other advantages of the present invention will be readily appreciated, as the same becomes better understood by reference to the following detailed description when considered in connection with the accompanying drawings:
Figure 1 shows a perspective view of the fuel filter assembly of the present invention;
Figure 2 shows an alternative perspective view of the fuel filter assembly;
Figure 3 shows a partially exploded perspective view of the fuel filter;
Figure 4 shows an exploded view of the filter assembly;
Figure 5 shows a front view of the filter element; and
Figure 6 shows a perspective view of the housing element with an installed water separator assembly.

### DETAILED DESCRIPTION

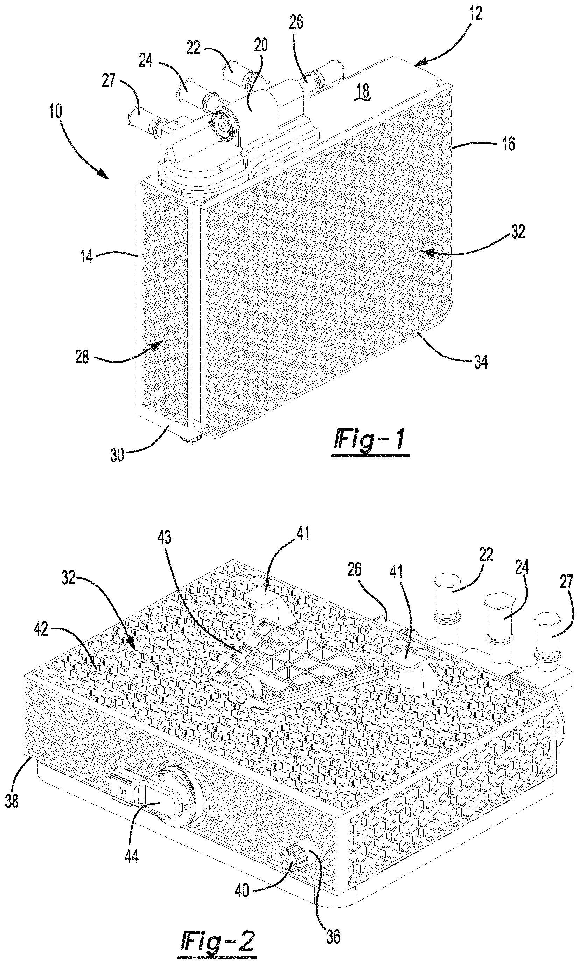

Referring to Figure 1, the filtration assembly for filtering diesel fuel used by diesel engine (not shown) is generally shown at 10. The assembly 10 includes a housing 12 defined by a main housing element 14 and a panel 16. The panel 16 is sealably secured to the main housing element 14 to obtain fuel within the housing 12 as will be explained further herein below. In one embodiment, the panel 16 is irremovably affixed to the main housing element 14.

The main housing element 14 includes an upper wall 18 onto which a manifold 20 is secured. The manifold 20 receives and evacuates diesel fuel from the housing 12. An unfiltered fuel inlet 24 is interconnected to the manifold 20 for delivering unfiltered fuel to the housing 12. A filtered fuel outlet 27 evacuates filtered fuel from the housing 12 and is interconnected with the diesel engine in a known manner.

Additionally, the manifold 20 includes a recirculation inlet 26 and a recirculation outlet 22 that respectively receives and returns fuel to the fuel tank. It should be understood to those of ordinary skill in the art that the recirculation fuel is used to heat or otherwise warm the fuel filter assembly 10 to improve performance.

A plurality of housing element webs 28 substantially covers an exterior surface 30 of the main housing element 14 to provide structural integrity to the main housing element 14. In a like manner, a plurality of panel webs 32 is disposed upon an exterior panel surface 34.

Referring to Figure 2, it should be readily apparent that substantially the entire exterior surface of the housing element includes housing element webs 28 for structural integrity. A drain 36 is disposed in a bottom panel 38 of the main housing element 14, the purpose of which will be explained further herein below. A plug 40 selectively prevents fuel from exiting the housing 12 through the drain 36. It should be readily apparent that the housing 12 includes a cuboid configuration enabling the filter assembly 10 to be conveniently located within a tight packaging area within an engine compartment or other location of a diesel vehicle. As such, cooperable links 41 are included on a rear wall 42 of the main housing element 14 to assist securing the filter assembly 10 at a desired location upon the vehicle. In addition, a fastener element 43 releasably secures the filter assembly with a fastener (not shown) at the desired location.

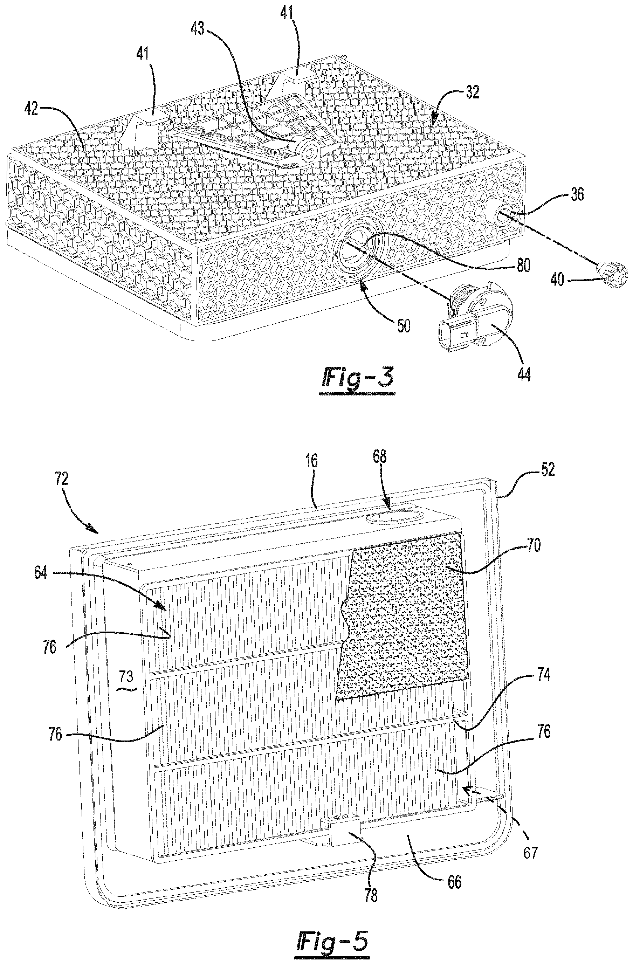

The bottom wall 38 of the main housing element 14 receives a sensor element 44 as best seen in Figure 3. The sensor element 44 connects to an engine controller (not shown) via a wire harness (not shown) that includes an electrical ground. The electrical connector is received through a sensor aperture 50 disposed in the bottom wall 38 of the main housing element 14. The sensor element 44 senses the amount of water content disposed in the fuel filter assembly 10, which may be drained by releasing the plug 40 from the drain 36 as will be explained further herein below.

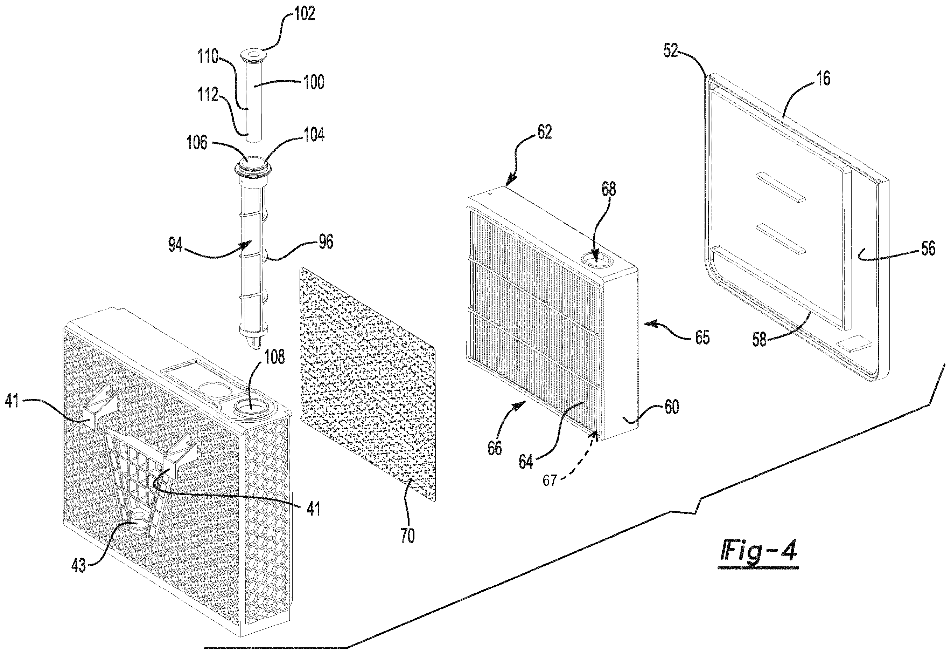

Referring now to Figure 4, filtration of diesel fuel will be readily apparent by way of explanation of the exploded view of the inner workings of the filter assembly 10. The panel 16 includes a bounding area 52 to facilitate securing the panel 16 in a sealable manner to the main housing element 14. It should be understood by those of ordinary skill in the art that the bounding area 52 is sealably secured by way of adhesive, laser welding, sonic welding, sealant, or an equivalent.

The panel 16 defines an inner surface 56 that includes a mating rib 58. The mating rib 58 is configured to receive a peripheral wall 60 of a filter element 62. The filter element 62 includes filter media 64 having a peripheral edge sealed to the peripheral wall 60 to define an unfiltered side 65 and a filtered side 66 of the filter element 62.

As such, when the peripheral wall 60 of the filter element 62 is mated to the inner surface 56 of the panel 16, an unfiltered chamber identified by element 67 is defined between the filter media 64 and the inner surface 56. An unfiltered fuel aperture 68 receives unfiltered fuel from the unfiltered fuel inlet 24. The unfiltered fuel received in the unfiltered fuel chamber 67 passes through the filter media 64 into a filtered chamber defined between the filter media 64 and a water diffuser and/or separator 70. The water diffuser and/or separator 70 allows cleaned fuel to pass while diffusing and/or separating water droplets disposed in the fuel, the purpose of which will be explained further herein below. As such, it should be understood that the water diffuser 70 is attached and may be sealed to the peripheral wall 60 of the filter element 62 so that fuel exiting the filter element 62 may partially or only pass through the water diffuser 70.

When fully assembled, the filter element 62 and the panel 16 form a filtration module 72 best represented in Figure 5. Formation of the filtration module 72 simplifies manufacture of the filter assembly 10 and also reduces mass of the filter assembly 10 by elimination of various components of the prior embodiment. For ease of understanding, the filtration module 72 shown in Figure 5 partially excludes the water diffuser 70. As such, it is readily apparent that the filter media 64 defined as a continuous corrugated sheet forms the unfiltered chamber 67 with the inner surface 56 of the panel 16. Opposing ribs 74 provide structural support to the peripheral wall 60 of the filter element 62 by extending between opposing vertical side walls 73 defining the peripheral wall 60. In an alternate embodiment, the ribs 74 are defined as shelves onto which separate filter sections 76 are sealed.

A conductive member 78 is received by the filter media 64 by features that are complimentary to the corrugations disposed in the filter media 64. The conductive member 78 contacts a connecting pin 80 integrated to the WIF sensor 44. The connecting pin 80 contacts a ground disposed in the electrical connector 46 to dissipate static electricity generated by fuel passing through the filter media 64.

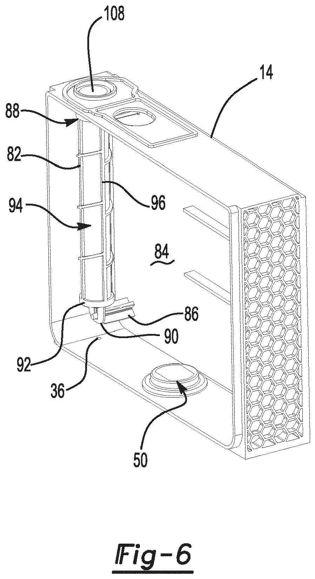

Referring now to Figure 6, a water separator assembly 82 (also seen in Figure 4) is secured to a rear surface 84 of the main housing element 14 by way of a connector 86. The water separator assembly 82 is disposed in a substantially vertical orientation within the filter assembly 10. When secured to the upper wall 108 at an upper end 88 and to the connector 86 by way of a receptor 90 disposed at a lower end 92. A water separator 94 takes the form of a hydrophobic screen extending between openings of a support lattice 96 that defines a tubular frame. The water separator 94 allows filtered fuel to pass into the support lattice 96 defined by the support lattice 96 while preventing water from entering the tubular frame. Because water has a higher specific gravity than diesel fuel, water collecting upon the water separator 94 collects at the bottom of the filter assembly 10 where it may be released from the assembly 10 by removing the plug 40 from the drain 36.

As best seen in Figure 4, a tube 100 extends downwardly into the support lattice 96 of the water separator assembly 94. The tube 100 includes a sealed portion 102 that seals to an upper flange 104 of the support lattice 96. A grommet 106 cooperates with the sealed portion 102 and an upper flange 104 to seal to the upper wall 18 of the main housing element 14 at the clean fuel aperture 108 through which clean fuel is delivered to the filtered fuel outlet 27.

The filter assembly 10 is also configured to reduce, and even recirculate air trapped in the diesel fuel from entering the diesel engine through the filter assembly 10. As such, the tube 100 includes an upper air aperture 110 and a lower air aperture 112. The upper air aperture 110 includes a similar cross-sectional area as does the lower air aperture 112 to balance evacuation of air from the tube 100. Therefore, air entering the tube 100 is trapped between the upper air aperture 110 and the lower air aperture 112 and will not be transferred out of the filter assembly through the filtered fuel outlet 27.

The invention has been described herein in an illustrative manner, and it is to be understood that the terminology which has been used is intended to be in the nature of words of description rather than of limitation. Obviously, any modifications and variations of the invention are possible in light of the above teachings. The invention can be practiced otherwise than is specifically described within the scope of the appendant claims.

## Claims

1. A filter assembly (10) for filtering diesel fuel used by a diesel engine, comprising:
a housing (14) comprising a cuboid configuration and defining a housing opening, an unfiltered fuel inlet (24) and a filtered fuel outlet (27);
a panel (16) being matable to said housing (14) for sealably enclosing said opening thereby forming a housing chamber, said panel (16) defining an inner surface (56) disposed within said housing chamber when said panel (16) encloses said opening;
a filter element (62) defined by a peripheral wall (60) and including filter media (64) having a peripheral edge sealed to the peripheral wall (60) to define an unfiltered side (65) and a filtered side (66) of said filter element (62), said peripheral wall (60) being sealably affixed to said inner surface (56) of said panel (16) thereby enclosing said unfiltered side (65) of said filter element (62) from said housing chamber and defining an unfiltered chamber between the filter media (64) and the inner surface (56), said unfiltered chamber being disposed in fluid communication with said unfiltered fuel inlet (24) via an unfiltered fluid aperture (68) in the peripheral wall (60); and
a permeable barrier (70) affixed to said peripheral wall (60) defining a filtered chamber with said filtered side (66) of said filter element (62) and receiving filtered fuel from said unfiltered chamber through said filter media (64);
said housing chamber receiving filtered fuel through said permeable barrier (70) and being fluidly connected with said filtered fuel outlet (27).

2. The filter assembly (10) set forth in claim 1, wherein said permeable barrier (70) comprises a water diffuser for diffusing and/or separating water droplets disposed in the filtered fuel.

3. The filter assembly (10) set forth in claim 1, including a water separator assembly (82) disposed externally to said filter element (62) receiving filtered fuel disposed inside said housing chamber.

4. The filter assembly (10) set forth in claim 3, wherein said filtered fuel outlet (27) is fluidly connected to said water separator assembly (82) for receiving clean fuel from said water separator assembly (82).

5. The filter assembly (10) set forth in claim 1, wherein said housing (14) includes a drain (36) located beneath said water separator assembly (82) for draining water from said filter assembly.

6. The filter assembly (10) set forth in claim 1, wherein said panel (16) is fixedly secured to said housing (14) by a laser weld, sonic weld, vibration weld, adhesive, or hot melt.

7. The filter assembly (10) set forth in claim 1, wherein said unfiltered fuel inlet (24) and said filtered fuel outlet (27) are interconnected with a manifold (20) being affixed to said housing (14).

8. The filter assembly (10) set forth in claim 7, wherein said manifold (20) includes a recirculation inlet (26) and a recirculation outlet (22) for recirculating unfiltered fuel through said filter assembly.

9. The filter assembly (10) set forth in claim 1, wherein said filter media (64) comprises a continuous sheet of corrugated filter media (64).

10. The filter assembly (10) set forth in claim 1, wherein said filter element (62) includes a conductive member (78) interconnecting said filter media (64) with a ground element thereby dissipating static electricity generated by fuel passing though said filter element (62).

11. The filter assembly (10) set forth in claim 3, wherein said water separator assembly (82) includes an air modulator for modulating an amount of air passing through a water separator (94).

12. The filter assembly (10) set forth in claim 11, wherein said air modulator comprises a substantially vertical tube (100) defining an upper air aperture (110) and a lower air aperture (112) spaced beneath said upper air aperture (110).

13. The filter assembly (10) set forth in claim 1, wherein said inner surface of said panel (16) includes a receptor (90) for sealably mating said panel (16) to said peripheral wall (60) of said filter element (62).

## Patentansprüche

1. Eine Filteranordnung (10) zum Filtern von Dieseltreibstoff verwendet von einem Dieselmotor, aufweisend:
ein Gehäuse (14) aufweisend eine würfelförmige Konfiguration und definierend eine Gehäuseöffnung, einen Einlass (24) für ungefilterten Treibstoff und einen Auslass (27) für gefilterten Treibstoff;
eine Platte (16), die anbringbar an dem Gehäuse (14) ist für dichtendes Verschließen der Öffnung und dadurch Bilden einer Gehäusekammer, wobei die Platte (16) eine innere Oberfläche (56) definiert, die angeordnet ist innerhalb der Gehäusekammer wenn die Platte (16) die Öffnung verschließt;
ein Filterelement (62) definiert durch eine periphere Wand (60) und beinhaltend ein Filtermedium (64), besitzend eine periphere Kante, abgedichtet an der peripheren Wand (60), um eine ungefilterte Seite (65) und eine gefilterte Seite (66) des Filterelements (62) zu definieren, wobei die periphere Wand (60) dichtend befestigt ist an der inneren Oberfläche (56) der Platte (16) und dadurch Verschließen der ungefilterten Seite (65) des Filterelements (62) von der Gehäusekammer und Definieren einer ungefilterten Kammer zwischen dem Filtermedium (64) und der inneren Oberfläche (56), wobei die ungefilterte Kammer angeordnet ist in Fluidkommunikation mit dem Einlass (24) für ungefilterten Treibstoff mittels einer Öffnung (68) für ungefiltertes Fluid in der peripheren Wand (60); und
eine durchlässige Barriere (70) befestigt an der peripheren Wand (60) definierend eine gefilterte Kammer mit der gefilterten Seite (66) des Filterelements (62) und empfangend gefilterten Treibstoff von der ungefilterten Kammer durch das Filtermedium (64);
die Gehäusekammer empfangend gefilterten Treibstoff durch die durchlässige Barriere (70) und in Fluidverbindung mit dem Auslass (27) für gefilterten Treibstoff.

2. Die Filteranordnung (10) gemäß Anspruch 1, wobei die durchlässige Barriere (70) aufweist einen Wasserdiffuser zum Diffundieren und/oder Trennen von Wassertropfen angeordnet in dem gefilterten Treibstoff.

3. Die Filteranordnung (10) gemäß Anspruch 1, umfassend eine Wassertrennungsanordnung (82) angeordnet extern zu dem Filterelement (62) empfangend gefilterten Treibstoff angeordnet in der Gehäusekammer.

4. Die Filteranordnung (10) gemäß Anspruch 3, wobei der Auslass (27) für gefilterten Treibstoff in Fluidverbindung ist mit der Wassertrennungsanordnung (82) zum Empfangen von sauberem Treibstoff von der Wassertrennungsanordnung (82).

5. Die Filteranordnung (10) gemäß Anspruch 1, wobei das Gehäuse (14) beinhaltet einen Abfluss (36) angeordnet unter der Wassertrennungsanordnung (82) zum Ablassen von Wasser aus der Filteranordnung.

6. Die Filteranordnung (10) gemäß Anspruch 1, wobei die Platte (16) fixierbar gesichert ist an dem Gehäuse (14) durch Laserschweißen, Ultraschallschweißen, Vibrationsschweißen, Klebstoff oder Heißschmelzen.

7. Die Filteranordnung (10) gemäß Anspruch 1, wobei der Einlass (24) für ungefilterten Treibstoff und der Auslass (27) für gefilterten Treibstoff verbunden sind mit einem Verteiler (20), der an dem Gehäuse (14) fixiert ist.

8. Die Filteranordnung (10) gemäß Anspruch 7, wobei der Verteiler (20) beinhaltet einen Rücklaufeinlass (26) und einen Rücklaufauslass (22) zum Zurückführen von ungefiltertem Treibstoff durch die Filteranordnung.

9. Die Filteranordnung (10) gemäß Anspruch 1, wobei das Filtermedium (64) aufweist eine kontinuierliche Lage von gewelltem Filtermedium (64).

10. Die Filteranordnung (10) gemäß Anspruch 1, wobei das Filterelement (62) beinhaltet ein leitfähiges Element (78), das das Filtermedium (64) mit einem geerdeten Element verbindet, dadurch zerstreuen statischer Elektrizität, die erzeugt wird durch Treibstoff, der durch das Filterelement (62) fließt.

11. Die Filteranordnung (10) gemäß Anspruch 3, wobei die Wassertrennungsanordnung (82) beinhaltet einen Luftmodulator zum Modulieren einer Menge von Luft, die durch einen Wassertrenner (94) fließt.

12. Die Filteranordnung (10) gemäß Anspruch 11, wobei der Luftmodulator aufweist ein im Wesentlichen vertikales Rohr (100), das eine obere Öffnung (110) und eine untere Öffnung (112), die unterhalb der oberen Öffnung (110) von dieser beabstandet ist, definiert.

13. Die Filteranordnung (10) gemäß Anspruch 1, wobei die innere Oberfläche der Platte (16) beinhaltet einen Empfänger (90) zum dichtenden Verbinden der Platte (16) an die periphere Wand (60) des Filterelements (62).

## Revendications

1. Un bloc filtrant (10) pour le filtrage d'un carburant Diesel utilisé par un moteur Diesel, comprenant :
un boîtier (14) comprenant une configuration parallélépipédique et définissant une ouverture de boîtier, une entrée de carburant non filtré (24) et une sortie de carburant filtré (27) ;
un panneau (16) pouvant être couplé audit boîtier (14) pour entourer de façon étanche ladite ouverture en formant ainsi un volume de boîtier, ledit panneau (16) définissant une surface interne (56) disposée à l'intérieur dudit volume de boîtier lorsque ledit panneau (16) enferme ladite ouverture ;
un élément filtrant (62) défini par une paroi périphérique (60) et comprenant un milieu filtrant (64) ayant un bord périphérique fixé de manière étanche à la paroi périphérique (60) pour définir un côté non filtré (65) et un côté filtré (66) dudit élément filtrant (62), ladite paroi périphérique (60) étant assujettie de manière étanche à ladite surface interne (56) dudit panneau (16) en enfermant ainsi ledit côté non filtré (65) dudit élément filtrant (62) dudit volume de boîtier et en définissant un volume non filtré entre le milieu filtrant (64) et la surface interne (56), ledit volume non filtré étant disposé en communication de fluide avec ladite entrée de carburant non filtré (24) via une ouverture de fluide non filtré (68) dans la paroi périphérique (60) ; et
une barrière perméable (70) assujettie à ladite paroi périphérique (60) définissant un volume filtré avec ledit côté filtré (66) dudit élément filtrant (62) et recevant du carburant filtré provenant dudit volume non filtré au travers dudit milieu filtrant (64) ;
ledit volume de boîtier recevant du carburant filtré au travers de ladite barrière perméable (70) et étant relié fluidiquement à ladite sortie de carburant filtré (27).

2. Le bloc filtrant (10) énoncé dans la revendication 1, dans lequel ladite barrière perméable (70) comprend un diffuseur d'eau pour la diffusion et/ou la séparation de gouttelettes d'eau présentes dans le carburant filtré.

3. Le bloc filtrant (10) énoncé dans la revendication 1, comprenant un bloc séparateur d'eau (82) disposé à l'extérieur dudit élément filtrant (62) recevant le carburant filtré situé à l'intérieur dudit volume de boîtier.

4. Le bloc filtrant (10) énoncé dans la revendication 3, dans lequel ladite sortie de carburant filtré (27) est reliée fluidiquement audit bloc séparateur d'eau (82) pour recevoir du carburant propre provenant dudit bloc séparateur d'eau (82).

5. Le bloc filtrant (10) énoncé dans la revendication 1, dans lequel ledit boîtier (14) comprend un drain (36) situé au-dessous dudit bloc séparateur d'eau (82) pour drainer l'eau provenant dudit bloc filtrant.

6. Le bloc filtrant (10) énoncé dans la revendication 1, dans lequel ledit panneau (16) est solidarisé et fixé audit boîtier (14) par une soudure laser, une soudure sonique, une soudure par vibrations, un adhésif, ou par fusion à chaud.

7. Le bloc filtrant (10) énoncé dans la revendication 1, dans lequel ladite entrée de carburant non filtré (24) et ladite sortie de carburant filtré (27) sont interconnectées par un répartiteur (20) qui est assujetti audit boîtier (14).

8. Le bloc filtrant (10) énoncé dans la revendication 7, dans lequel ledit répartiteur (20) comprend une entrée de recirculation (26) et une sortie de recirculation (22) pour faire recirculer le carburant non filtré au travers dudit bloc filtrant.

9. Le bloc filtrant (10) énoncé dans la revendication 1, dans lequel ledit milieu filtrant (64) comprend une feuille continue de milieu filtrant ondulé (64).

10. Le bloc filtrant (10) énoncé dans la revendication 1, dans lequel ledit élément filtrant (62) comprend un composant conducteur (78) interconnectant ledit milieu filtrant (64) avec un élément de masse, pour dissiper l'électricité statique générée par le carburant traversant ledit élément filtrant (62).

11. Le bloc filtrant (10) énoncé dans la revendication 3, dans lequel le bloc séparateur d'eau (82) comprend un modulateur d'air pour moduler une quantité d'air traversant un séparateur d'eau (94).

12. Le bloc filtrant (10) énoncé dans la revendication 11, dans lequel ledit modulateur d'air comprend un tube substantiellement vertical (100) définissant une ouverture d'air supérieure (110) et une ouverture d'air inférieure (112) située à distance au-dessous de ladite ouverture d'air supérieure (110).

13. Le bloc filtrant (10) énoncé dans la revendication 1, dans lequel ladite surface interne dudit panneau (16) comprend un récepteur (90) pour coupler de façon étanche ledit panneau (16) à ladite paroi périphérique (60) dudit élément filtrant (62).
